# EUROPEAN PATENT APPLICATION

(11) **EP 1 287 761 A1**
(43) Date of publication of application: **05.03.2003**
(21) Application number: 02255950.4
(22) Date of filing: 27.08.2002
(51) Int. Cl.: A47B 46/00, F16B 12/02

(54) **Improvements in and relating to furniture**

(30) Priority: 13.09.2001 GB 0122338; 29.08.2001 GB 0120879
(71) Applicant: Fray Design Limited, Keighley, West Yorkshire BD20 9LE (GB)
(72) Inventor: Fray, Barry, c/o Fray Design Limited, Keighley, BD20 9LE (GB)
(74) Representative: Pawlyn, Anthony Neil

(57) **Abstract**

A method of mounting a component on a frame of an item of furniture, item of furniture incorporating such a mounting and fixings for providing the mounting are provided to enable components such as modesty panels to be easily mounted on furniture. The method involves engaging one or more fixings with the frame, the frame being engaged by a first portion of fixing, the first portion defining an axis of rotation for the fixing relative to the frame, the fixing including a second portion at an angle to the first portion and a third portion at an angle to the second portion, the fixing being rotated about its axis to a first position in which the second portion defines a first angle relative to the vertical, the component being introduced to the fixing and at least a part of the third portion engaging with the component, the fixing being rotated about its axis to a second position in which the second portion defines a second different angle relative to the vertical, the rotation fixing from the second to the first position rotating the component to a mounted position.

Significant improvements in ease of mounting and dismounting panels on furniture, improved access to the near side of panels on furniture and improvements in terms of the variety of panels which can be fixed without affecting the aesthetic appearance of the furniture are achieved.

## Description

This invention concerns improvements in and relating to furniture and particularly fixings and methods of fixing for panels attached thereto, particularly but not exclusively modesty panels.

A significant number of situations call for furniture which is readily assemblable on site and often dismantlable at a time thereafter. To achieve this, suitable collapsable frames are required in conjunction with suitable removeable tops. A variety of furniture items also call for facing panels to be attached to the furniture on one or more sides. Such panels are particularly provided around furniture at which people sit so as to provide modesty cover by obscuring the under part of the table from the non-seating side. Alternatively or additionally such panels sometimes need to be removed or at least moved to allow access to concealed areas under the desk, for instance those which receive wiring and cabling.

A variety of fixings are provided presently to achieve the positioning of such panels, particularly bolts and screws which are inserted through the leg of the furniture and into the panel. Such fixings are relatively time consuming to instal, and do not allow easy access to the inside of the panel once positioned. Additionally, a significant number of holes in the legs or other support structure for the furniture are required so as to accommodate different modesty panels and other panels of differing sizes.

The present invention has amongst its aims the provision of an improved fixing for attaching panels to furniture. The present invention has amongst its aims the provision of improved method of mounting and dismounting panels on furniture. The present invention has amongst its aims the provision of a fixing, and method of use thereof, which offers improved access to the rear side of the panel. The present invention has amongst its aims the provision of a fixing, and method of use thereof, which allows a greater variety of panels to be fixed whilst minimising the impact on the legs or support structure for the furniture. The present invention has amongst its aims the provision of a fixing, and / or method of use thereof, which is fully concealed in use.

According to a first aspect of the invention we provide a fixing, the fixing including a first portion, second portion and third portion, the first and second portions being at an angle to one another, the second and third portions being at an angle to one another.

The first portion of the fixing is preferably of circular cross-section. The second and/or third portions of the fixing may be of circular cross-section or may be of alternative cross-section such as rectilinear or square.

Preferably the angle between the first and second portions is between 70° and 110°, more preferably is between 80° and 100° and ideally is 90° +/- 1°. Preferably the angle is measured between the axis of the first portion and an axis of the second portion.

Preferably the angle between the second and third portions is between 70° and 110°, more preferably is between 80° and 100° and ideally is 90° +/- 1°. Preferably the angle is measured between an axis of the second portion and an axis of the third portion.

Preferably the first and third portions are at an angle of less than 10° to one another, more preferably less than 5° to one another and are ideally parallel to one another +/- 1°.

Preferably the third portion includes a part angled relative to the third portion. The angled part may be provided at the end of the third portion away from the second portion. The angled part may be of circular cross-section. The angle between the angled part and the third portion may be between 70° and 110°, more preferably is between 80° and 100° and ideally is 90° +/- 1°. Preferably the angle is measured between the axis of the third portion and an axis of the angled part. The angled part and second portion are preferably at an angle of less than 10° to one another, more preferably less than 5° to one another and are ideally parallel to one another +/- 1°.

An alternative embodiment of the invention provides a fixing having two first portion and two second portions linked by a common third portion.

Preferably the two first portions extend in opposing directions to one another. The two first portions are preferably parallel to one another and ideally on the same axis. The second components are preferably parallel to one another. The third portion is preferably parallel to the first portions. The other relative angles provided above may apply. Preferably the third portion is flexible.

In a preferred embodiment of the invention the fixing may additionally be provided with a variable length part in the second portion. The variable length part is preferably provided by an extensible part. Preferably the variable length part is resilient. The variable length part may particularly be provided by a spring. Preferably the variable length part is attached to one part of the second portion by a screw thread. Preferably the variable length part is attached to the second part of the second portion by a screw thread. The variable length part may provide the mid part of the second portion. Preferably the variable length part allows the second portion to have an overall length of between 5cm and 100cm. The fixing may have further features, possibilities and options as set out above.

According to a second aspect of the invention we provide an item of furniture, the item of furniture including a frame and one or more components mounted thereon, the mounting being provided by one or more fixings, at least one of the fixings including a first portion which engages with the frame and defines an axis of rotation for the fixing relative to the frame, a second portion at an angle to the first and a third portion at an angle to the second, at least a part of the third portion engaging with the component.

The second aspect of the invention may include any of the features, options or possibilities described elsewhere in this document for the fixing, particularly those described in relation to the first aspect of the invention.

The item of furniture may be a table, desk, console. reception unit, seating area, seating location or the like.

The frame may be a support frame for a work surface. such as a table top. The frame may include one or more legs for the furniture.

The component is preferably a panel and ideally a planar panel. The panel may be rectilinear. Preferably the panel has straight top and side edges. The bottom edge may be straight or shaped. The component may be a modesty panel or vision obscuring panel. One or more components may be provided on an item of furniture. For instance a component may be provided on non-seating sides of an item of furniture, such as three out of four sides. The component may extend between the work surface of the item of furniture and/or the top of the frame and the floor or only part way to the floor.

A plurality of fixings may be provided for a component. Preferably two fixings are provided, ideally one engaging with one side of the component and the other engaging with the other side.

Preferably the first portion engages with an aperture in the frame. Preferably the aperture is in a leg of the frame. The first portion may engage the frame directly or may engage with a mount provided in the frame, for instance a grommet or bush. The axis of the aperture is preferably perpendicular to the surround frame or at least the surface thereof facing the fixing.

Preferably the axis of rotation provided by the first portion is horizontal +/- 5°.

Preferably the entire third portion engages with the component. The component may engage the third portion by resting on the third portion. The angled part of the third portion may be received in an a aperture in the component.

The component may be provided with a groove it at least in a part of its periphery. Preferably the third portion of the fixing is received within a groove of the component. Preferably the aperture or hole for the angled part of the third portion is provided in the bottom of a groove in the periphery of the component. The second portion of the fixing may be received in a groove in the component and ideally cooperates therewith. Preferably the groove receiving the second portion of the fixing is provided on a different side of the component to the groove receiving the third component and/or angled part thereof. The groove may extend around the entire periphery of the component. The groove or grooves are preferably provided in the edges of the component.

The component may be mounted on the item using one or more further fixings. The further fixings preferably engage the upper part of the component, ideally near the edge thereof. The further fixings are preferably releasable. The further fixings may be clips, catches, screws, bolts or hooks and eyes (such as Velcro - Registered Trademark).

The component may be attached to the item using one or more releasable attachments, preferably the attachments are provided at or near the upper edge of the component and frame. Preferably the attachments have a restraining position and a relaxed position. The attachments may be straps, cords, chains, bands or other elongate flexible or variable length parts. The attachments may be releasably attached to the component and/or to the frame by clips, catches, screws, bolts or hooks and eyes (such as Velcro - Registered Trademark).

In the alternative embodiment of the invention it is preferred that the third portion of the fixing extends across the entire bottom edge of the component, ideally in a groove. A single fixing may be used for each component in this embodiment. Preferably the axis of rotation of both first portions rests on a common axis.

In the preferred embodiment of the invention preferably the variable length part is extended with the component mounted on the item of furniture. Preferably the variable length part provides a load of 10kg +/- 5kg with the component mounted on the furniture. Preferably the variable length part is received within a groove in the edge of the component. Preferably the groove supports the position of the variable length part. Preferably the further fixings are formed by holes in the frame and/or component and cooperating projections on the other of the component and/or frame. Preferably projections on the frame cooperate with holes in the component. Preferably the holes are provided in a groove in the component. Preferably the holes have corresponding positions to the holes in the opposing side of the component which receive the third portion of the fixings.

According to a third aspect of the invention we provide a method of mounting a component on a frame of an item of furniture, the method including engaging one or more fixings with the frame, the frame being engaged by a first portion of a fixing, the first portion defining an axis of rotation for the fixing relative to the frame, the fixing including a second portion at an angle to the first portion and a third portion at an angle to the second portion, the fixing being rotated about its axis to a first position in which the second portion defines a first angle relative to the vertical, the component being introduced to the fixing and at least a part of the third portion engaging with the component, the fixing being rotated about its axis to a second position in which the second portion defines a second different angle relative to the vertical, the rotation of the fixing from the second to the first position rotating the component to a mounted position.

The third aspect of the invention may include any of the features, options or possibilities described elsewhere in this document for the fixing, particularly those described in relation to the first aspect of the invention.

The third aspect of the invention may include any of the features, options or possibilities described elsewhere in this document for the item of furniture and/or component, particularly those described in the second aspect of the invention.

Preferably the fixing is engaged with the frame by inserting the first portion of the fixing at least partially within the frame. The first portion may be inserted axially, ideally along its axis of rotation.

Preferably the first position is the mounting position for the component on the fixing or fixings. Preferably the component is inclined relative to the vertical in the first position. Preferably an inclination of between 90° and 5° to the vertical is provided in the first position for the second portion of the fixing and/or the component.

Preferably the component is introduced to the fixing by moving the component in a direction corresponding to a projection of the plane of the component. A sliding style movement is preferred. Preferably the component is introduced to the third portion of the fixing and ideally the angled part in particular. Preferably the angled part of the third portion engages with an aperture or hole in the component. Preferably the third portion of the fixing engages with a groove in the component. Preferably the second portion of the fixing is received within and/or engages with a groove in the component. Preferably the junction between the first portion and second portion of the fixing is received within a groove of the component.

The fixing may be rotated directly or may be rotated by moving the component along a path constrained by the cooperation between the fixing and the component. In particular the component may be rotated. The component may be rotated by moving its upper edge towards the item of furniture.

Preferably in the second position the second portion and/or the component is vertically aligned +/- 10° or more preferably +/-5°.

In the mounted position preferably the component engages with one or more further fixings. Preferably in the first position the component is spaced from the one or more further fixings. The further fixings may be provided as described above.

The component and/or second portion may have a further position at which the component is restrained by one or more releasable attachments, particularly as described above. The restraining position may be at the first position. The restraining position may be intermediate the first and second positions. The restraining position may be defined by the maximum extent of the attachments. In the restraining position the rear of the components may be accessible, with the component still retained on the item.. Access to electrical connections, wiring and other features on the rear of the component and/or mounted in parts provided on the component can be provided in this way. The attachments may be attached to link the component and item prior to transition from the first to the second position or at a stage intermediate the two.

In the alternative embodiment of the invention preferably the component is introduced to the single third portion throughout its length simultaneously.

In the preferred embodiment of the invention preferably the length of the length variable portion is increased by the introduction of the component. The length may be extended to a first extended length relative to the shorter rest length of the variable length part during the introduction. Preferably the length is at a second extended length in the second position. Preferably the second extended length is longer than the rest length. Preferably the length variable portion is extended to a length greater than the second extended length during at least a part of the transition from the first to the second positions. Preferably a decrease in length to the second extended length occurs in the second position, ideally during the engagement of the holes in the component with the projections of the item.

In the preferred embodiment of the invention preferably the first length and/or the second length is greater for higher components than for shorter components. Preferably the same engagement location between the first portion and the item can be used for different height components. Preferably different length first and/or second extended lengths accommodate the increased separation between the engagement location and the bottom of the component and/or the third portion of the fixing in such greater height cases. Preferably the engagement location is provided in the upper quarter of the frame, preferably considered relative to the separation of the work surface and/or frame top and the floor.

According to a fourth aspect of the invention we provide a method of releasing a component from a frame on an item of furniture into a demountable position, the component engaging one or more fixings and the one or more fixings engaging the frame in the mounted position, the frame being engaged by a first portion of a fixing, the first portion defining an axis of rotation for the fixing relative to the frame, the fixing including a second portion at an angle to the first portion and a third portion at an angle to the second portion, the method including rotating the fixing about its axis from a second position in which the second portion defines a second angle relative to the vertical to a first position in which the second portion defines a first angle relative to the vertical, the rotation of the fixing from the first to the second position rotating the component from its mounted position to a demountable position, the component being removable from the third portion of the fixing which engages the component in the demountable position.

The fourth aspect of the invention may include any of the features, options or possibilities described elsewhere in this document for the fixing, particularly those described in relation to the first aspect of the invention.

The fourth aspect of the invention may include any of the features, options or possibilities described elsewhere in this document for the item of furniture and/or component, particularly those described in the second aspect of the invention.

The component may be removed from the item in the first position. The component may be placed in the first position for other reasons, such as to allow access to the rear face of the component or an item mounted thereon.

Preferably the first position is the mounting position for the component on the fixing or fixings. Preferably the component is inclined relative to the vertical in the first position. Preferably an inclination of between 90° and 5° to the vertical is provided in the first position for the second portion of the fixing and/or the component.

Preferably the component is removable relative to the fixing by moving the component away from the fixing in a direction corresponding to a projection of the plane of the component. A sliding style movement is preferred. Preferably the component is removable relative to the third portion of the fixing and ideally the angled part in particular. Preferably the angled part of the third portion can be disengaged from an aperture or hole in the component. Preferably the second portion of the fixing can be removed from within and/or from engagement with a groove in the component in this position.

The fixing may be rotated directly or may be rotated by moving the component along a path constrained by the cooperation between the fixing and the component. In particular the component may be rotated. The component may be rotated by moving its upper edge away from the item of furniture.

Preferably in the second position the second portion and/or the component is vertically aligned +/- 10° or more preferably +/-5°.

In removing the component from the mounted position preferably the component is disengaged from one or more further fixings. Preferably in the first position the component is spaced from the one or more further fixings. The further fixings may be provided as described above.

The component and/or second portion may have a further position at which the component is restrained by one or more releasable attachments, particularly as described above. The restraining position may be at the first position. The restraining position may be intermediate the first and second positions. The restraining position may be defined by the maximum extent of the attachments. Preferably the attachments are released to allow the component to be removed from the item.

In the preferred embodiment of the invention preferably the length of the length variable portion is decreased by the removal of the component. The length may change from a first extended length to a shorter rest length of the variable length part during the removal. Preferably the length is at a second extended length in the second position. Preferably the second extended length is longer than the rest length. Preferably the length variable portion is extended to a length greater than the second extended length during at least a part of the transition from the second to the first positions. Preferably an increase in length from the second extended length occurs in the second position, ideally during the disengagement of the holes in the component with the projections of the item.

Various embodiments of the invention will now be described, by way of example only, and with reference to the accompanying drawings in which:-
Figure 1 is a cross sectional front elevation of a fixing according to one embodiment of the invention in use;
Figure 2 illustrates one stage in the assembly of an item of furniture employing a fixing according to the first embodiment;
Figure 3 illustrates a second embodiment of a fixing according to the present invention; and
Figure 4 illustrates a number of states for a fixing according to a third preferred embodiment of the present invention.

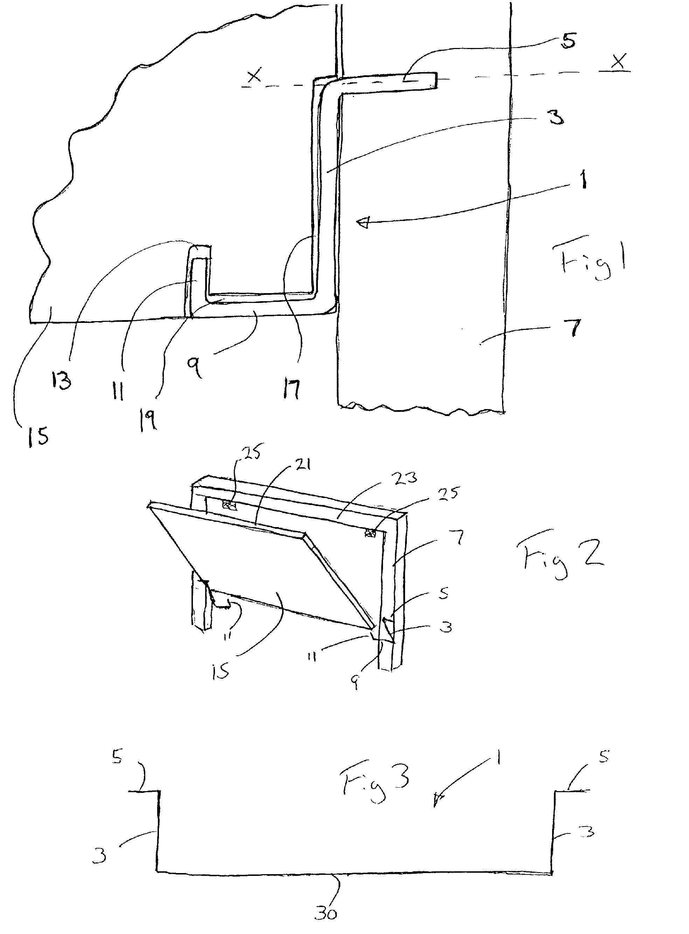

As illustrated with reference to Figure 1, one embodiment of the fixing of the present invention uses a fixing 1 formed of a length of circular cross sectional metal provided with a vertical stem 3, first horizontal portion 5 which engages with a leg 7 of the furniture in use. The fixing 1 is also provided with a second horizontal portion 9 which ends in an upright end 11 which engages a hole 13 provided in a bottom of a panel 15 which is attached to the furniture by the fixing 1. The upright 3 is accommodated within a vertical recess 17 in the panel 15 and the second horizontal portion 9 is accommodated in a further recess 19 in the bottom edge of the panel 15.

As a consequence of this configuration, the fixing 1 is invisible from conventional viewing angles of the furniture when in use.

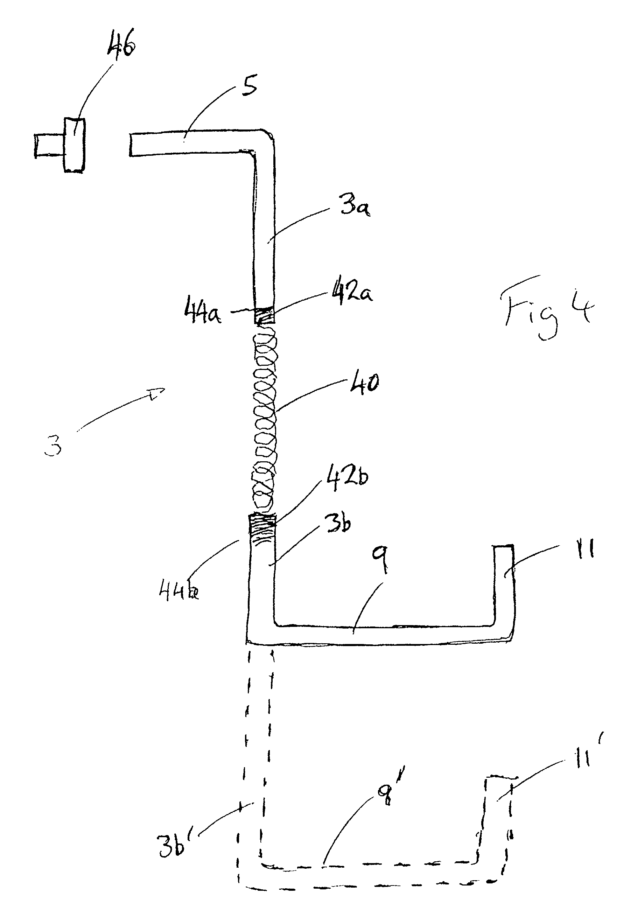

As illustrated in conjunction with Figure 2, the circular cross section of the fixing 1, particularly as this applies to the first horizontal portion 5, allows the fixing to rotate about the axis XX shown in Figure 1 so that the vertical portion 3 is no longer vertically aligned. In this state, the end portion 11 also points outward at an angle relative to the leg of the support structure as shown in Figure 2. With an equivalent fixing on the other side in an equivalent position, the panel 15 can be slid into position so that the ends 11 engage with the apertures 13 in the bottom of the panel. Once engaged the panel can be swung into position by allowing the fixings 1 to reassume their vertical configuration thus bringing the top edge 21 of the panel 15 into alignment with the top part 23 of the support frame. In this position, releasable fixings 25 can be used to retain the top edge of the panel in position. Such fixings can be velcro, screws, clips or the like.

To remove the panel the top edge 21 of the panel is levered out so as to disengage it from the releasable fastenings 25 and the panel can then be lifted off the fixings 1. This is an easy and fully repeatable process which requires minimal time.

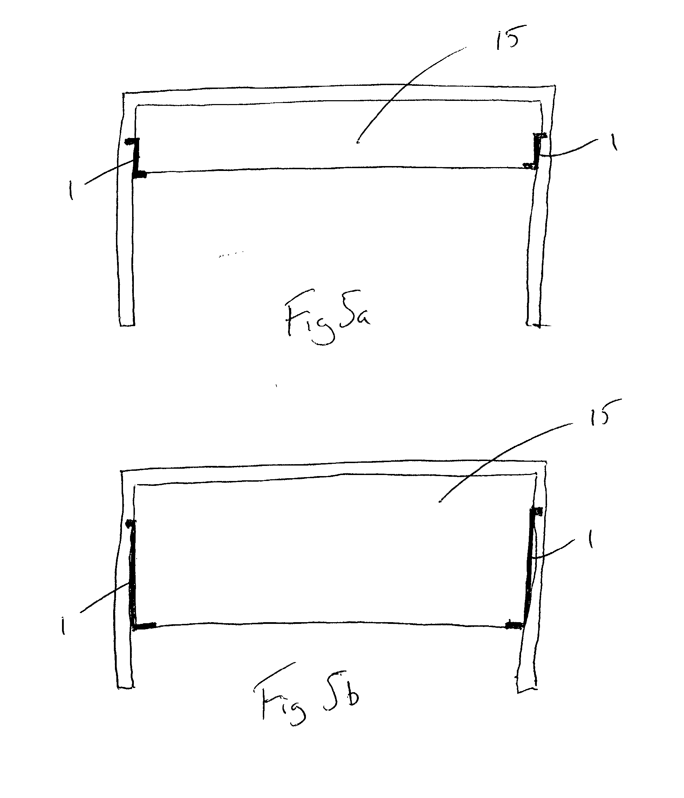

Figure 3 illustrates a further possible embodiment of fixing according to the present invention. As illustrated the fixing for both sides of the table are joined by continuous element 30 which extends from the uprights 3 in each case. Equivalent horizontal portions 5 are provided which engage with apertures in the legs of the furniture. To introduce the fixing 1 into position, the fixing is flexed so as to reduce the separation between the two first horizontal portions 5. Once the very ends of the first horizontal portions 5 are brought into position relative to the apertures in the leg then the fixing can be relaxed and those portions enter the apertures in the legs. The entire underside of the modesty panel in a case such as this is provided with a recessed groove to accommodate the entire horizontal length of the element 30. This groove in conjunction with the grooves up the sides of the panel which accommodate the vertical portions 3 allows the modesty panel to be fully retained in position. The process for exerting and removing the modesty panel operates in a similar manner to the principal outlined about in conjunction with Figure 2.

A more preferred embodiment of the invention is illustrated with respect to Figure 4. In this case an horizontal first portion 5, horizontal second portion 9, upturned end 11 and vertical portion 3 is provided but the vertical portion 3 is broken into two parts, 3a and 3b, which are connected together by a spring 40. The spring 40 is provided with a threaded element 42a, 42b at each end which engages with an internal thread 44a and 44b in the respective ends of the elements 3a and 3b. The first portion 5 is received in the leg of the furniture of a grommet 46. The spring 40 is received in the recess in the edge of the panel and the third portion 9 and upturned end 11 cooperate with the panel as previously described. In this position the spring 40 is extended, but is maintained in the desired configuration and obscured from view by the recesses in the modesty panels.

To accommodate a greater height of modesty panel (i.e. one which extends further down towards the floor relative to the top of the item of furniture) the same hole in the furniture support can be used to provide the mounting for element 5 but the spring is further extended so as to provide the lower part 3b of the element 3, second horizontal element 9 and upturned end 11 in the 3b', 9' and 11' position illustrated. The spring thus allows a significant number of different heights of modesty panel to be accommodated, as illustrated schematically in Figures 5a and 5b, using only a single mounting in the table leg, and thus reducing manufacturing costs and undesirable visual impact from such mountings being exposed (as occurs on the lower part of legs with existing systems where only a short modesty panel is deployed).

As well as providing a totally secret and versatile mounting on the panels, the absence of any external requirements for a fixing on the panels leaves those panels fully reversible.

In operation, the spring type fixing of the Figure 4 embodiment is twisted to the type of position illustrated in Figure 2 and the panel is pushed down and on to the ends 11 of the fixing. The downward force applied causes the springs to deform and extend, and thus allows the top edge 21 of the panel to be pushed in and under the top edge 23 of the support. The top edge 23 of the support may be provided with a number of pins which correspond with apertures in the top edge of the panel 15. By allowing the fixing 1 to push the panel back up under the top edge 23 of the support, due to the force applied by the spring itself, these pins are brought into engagement with the apertures in the panel 15 and thus provide a strong retention for the panels 15. A 10kg load applied by the springs is desirable for this purpose.

## Claims

1. A method of mounting a component on a frame of an item of furniture, the method including engaging one or more fixings with the frame, the frame being engaged by a first portion of a fixing, the first portion defining an axis of rotation for the fixing relative to the frame, the fixing including a second portion at an angle to the first portion and a third portion at an angle to the second portion, the fixing being rotated about its axis to a first position in which the second portion defines a first angle relative to the vertical, the component being introduced to the fixing and at least a part of the third portion engaging with the component, the fixing being rotated about its axis to a second position in which the second portion defines a second different angle relative to the vertical, the rotation of the fixing from the second to the first position rotating the component to a mounted position.

2. A method according to claim 1, in which the first position is the mounting position for the component on the fixing or fixings and an inclination of between 90° and 5° to the vertical is provided in the first position for the second portion of the fixing and/or the component.

3. A method according to claim 1 or claim 2 in which the third portion is provided with a part angled relative to it and the angled part of the third portion engages with an aperture or hole in the component.

4. A method according to any preceding claim in which the third portion of the fixing engages with a groove in the component, and/or the second portion of the fixing is received within and/or engages with a groove in the component.

5. A method according to any preceding claim in which in the mounted position, the component engages with one or more further fixings.

6. A method according to any preceding claim in which the component and/or second portion has a further position at which the component is restrained by one or more releasable attachments, the further position being intermediate the first and second positions.

7. A method according to any preceding claim in which the fixing is provided with a length variable portion and the length of the length variable portion is increased by the introduction of the component, the length being extended to a first extended length relative to the shorter rest length of the variable length part during the introduction, the length being at a second extended length in the second position, the second extended length being longer than the rest length.

8. A method of releasing a component from a frame on an item of furniture into a demountable position, the component engaging one or more fixings and the one or more fixings engaging the frame in the mounted position, the frame being engaged by a first portion of a fixing, the first portion defining an axis of rotation for the fixing relative to the frame, the fixing including a second portion at an angle to the first portion and a third portion at an angle to the second portion, the method including rotating the fixing about its axis from a second position in which the second portion defines a second angle relative to the vertical to a first position in which the second portion defines a first angle relative to the vertical, the rotation of the fixing from the first to the second position rotating the component from its mounted position to a demountable position, the component being removable from the third portion of the fixing which engages the component in the demountable position.

9. A fixing, the fixing including a first portion, second portion and third portion, the first and second portions being at an angle to one another, the angle being between 70° and 110°, the angle being measured between the axis of the first portion and an axis of the second portion, the second and third portions being at an angle to one another, the angle between the second and third portions being between 70° and 110°, the angle being measured between an axis of the second portion and an axis of the third portion.

10. A fixing according to claim 9 in which the first portion of the fixing is of circular cross-section.

11. A fixing according to claim 9 or claim 10 in which the first and third portions are parallel to one another +/-1°.

12. A fixing according to any of claims 9 to 11 in which the third portion includes apart angled relative to the third portion, and the angle between the angled part and the third portion is between 70° and 110°, the angle being measured between the axis of the third portion and an axis of the angled part.

13. A fixing according to any one of claims 9 to 12 in which the fixing has two first portions and two second portions linked by a common third portion, the two first portions extending in opposing directions to one another.

14. A fixing according to any one of claims 9 to 13 in which the fixing is provided with a variable length part in the second portion.

15. A fixing according to claim 14 in which the variable length is resilient.

16. A fixing according to claim 14 or claim 15 in which the variable length allows the second portion to have an overall length of between 5cm and 100cm.

17. An item of furniture, the item of furniture including a frame and one or more components mounted thereon, the mounting being provided by one or more fixings, at least one of the fixings including a first portion which engages with the frame and defines an axis of rotation for the fixing relative to the frame, a second portion at an angle to the first and a third portion at an angle to the second, at least a part of the third portion engaging with the component.

18. An item of furniture according to claim 17 in which the component is a modesty panel or vision obscuring panel.

19. An item of furniture according to claim 17 or claim 18 in which a plurality of fixings are provided for a component, at least one engaging with one side of the component and at least one engaging with the other side.

20. An item of furniture according to any one of claims 17 to 19 in which the first portion engages with an aperture in the frame.

21. An item of furniture according to any one of claims 17 to 20 in which the entire third portion engages with the component, the component engaging the third portion by resting on the third portion.

22. An item of furniture according to any one of claims 17 to 21 in which the component is provided with a groove in at least a part of its periphery, the third portion of the fixing is received within a groove of the component and/or the second portion of the fixing is received in a groove in the component.

23. An item of furniture according to any one of claims 17 to 22 in which the component is attached to the item using one or more releasable attachments, the attachments being provided at or near the upper edge of the component and frame.

24. An item of furniture according to any one of claims 17 to 23 in which the fixing is provided with a variable length part and the variable length part is extended with the component mounted on the item of furniture.

25. An item of furniture according to any one of claims 12 to 23 in which a length variable part is provided and the variable length part is received within a groove in the edge of the component.
